# EUROPÄISCHE PATENTSCHRIFT

(11) **EP 3 279 619 B1**
(45) Veröffentlichungstag und Bekanntmachung des Hinweises auf die Patenterteilung: **12.02.2020**
(21) Anmeldenummer: 16182151.7
(22) Anmeldetag: 01.08.2016
(51) Int. Cl.: G01F 23/284, G01S 7/03, G01S 7/40, G01S 13/34

(54) **RADARFÜLLSTANDMESSGERÄT**
RADAR FILL LEVEL MEASURING DEVICE
APPAREIL DE MESURE DE NIVEAU DE REMPLISSAGE PAR RADAR

(43) Veröffentlichungstag der Anmeldung: 07.02.2018
(73) Patentinhaber: VEGA Grieshaber KG, 77709 Wolfach (DE)
(72) Erfinder: MÜLLER, Christoph, 77728 Oppenau (DE); SCHULTHEISS, Daniel, 78132 Hornberg (DE); FISCHER, Michael, 72275 Alpirsbach (DE)
(74) Vertreter: Maiwald Patent- und Rechtsanwaltsgesellschaft mbH

(56) Entgegenhaltungen:
- EP-A2- 2 166 671
- WO-A1-01/52418
- WO-A1-86/00476
- WO-A1-98/32028
- US-A- 5 589 838
- US-A1- 2003 222 654
- US-A1- 2010 277 359
- US-A1- 2014 253 147

## Beschreibung

### Gebiet der Erfindung

Die Erfindung betrifft allgemein das Gebiet radarbasierter Füllstandmessung. Insbesondere betrifft die Erfindung ein Radarfüllstandmessgerät, ein Verfahren zum Betreiben eines Radarfüllstandmessgeräts, ein Programmelement für ein Radarfüllstandmessgerät sowie ein computerlesbares Medium mit einem Programmelement.

### Technischer Hintergrund der Erfindung

Radarfüllstandmessgeräte, d.h. Radarsensoren zur Füllstandmessung, weisen Hochfrequenzmodule und/oder Hochfrequenzschaltungen auf, welche häufig getaktet betrieben werden. Bei einem solchen getakteten Betrieb werden abwechselnd aktive Perioden und inaktive Perioden des Betriebs durchlaufen, wobei in den aktiven Perioden Messsignale in Richtung des Füllgutes abgestrahlt werden und in den inaktive Perioden keine Messsignale gesendet werden.

Um Energie einzusparen, wird in den inaktiven Perioden das komplette Hochfrequenzmodul oder zumindest ein Teil der Komponenten des Hochfrequenzmoduls von einer Energieversorgung, etwa einer Spannungs- und/oder Stromversorgung, getrennt. Da üblicherweise die Komponenten der Hochfrequenzmodule zu den größten Verbrauchern elektrischer Energie im Radarfüllstandmessgerät gehören, kann dadurch eine Messrate des Radarfüllstandmessgeräts bei gegebener und/oder begrenzter Energiezufuhr erhöht werden.

Ein weiterer Grund, weshalb Radarfüllstandmessgeräte häufig in getaktetem Betrieb betrieben werden, ist die Einhaltung von gesetzlich festgelegten Emissionsgrenzen hochfrequenter Radarsignale, um beispielsweise das Radarfüllstandmessgerät in Behältern und/oder im Freien verwenden zu dürfen. Wenn nicht dauerhaft ein Messsignal gesendet wird, insbesondere des Hochfrequenzteils des emittierten Messsignales, so kann auf diese Weise eine mittlere abgestrahlte Leistung bzw. eine mittlere Sendeleistung des Radarfüllstandmessgeräts entsprechend reduziert werden.

Dokument US 2014/253147 A1 beschreibt ein FMCW Radarfüllstandmessgerät mit einer Phasenregelschleife (PLL) und einer Verriegelungs-Steuerung. Als Antwort auf ein Signal der PLL wird ein Schalter betätigt, um Frequenzvervielfacher zu aktivieren und ein Messsignal zu senden.

### Zusammenfassung der Erfindung

Es ist eine Aufgabe der Erfindung, ein zuverlässiges, energieeffizientes und insbesondere in einem getakteten Betrieb auf Funktionstüchtigkeit überprüfbares Radarfüllstandmessgerät bereitzustellen.

Diese Aufgabe wird durch die Merkmale der unabhängigen Ansprüche gelöst. Weiterbildungen der Erfindung ergeben sich aus den abhängigen Ansprüchen und der nachfolgenden Beschreibung.

Ein Aspekt der Erfindung betrifft ein Radarfüllstandmessgerät zum Ermitteln eines Füllstandes eines Füllguts, insbesondere eines Füllguts in einem Behälter. Das Radarfüllstandmessgerät kann einen Radarsensor bzw. Sensor zur Füllstandmessung bezeichnen. Das Radarfüllstandmessgerät weist einen Frequenzsynthesizer zum Erzeugen eines Oszillatorsignals auf. Der Frequenzsynthesizer kann dabei etwa einen Frequenzgenerator, ein Modul und/oder eine Schaltung zum Erzeugen des Oszillatorsignals bezeichnen. Weiter weist das Radarfüllstandmessgerät ein Hochfrequenzmodul und/oder eine Hochfrequenzschaltung zum Erzeugen eines Sendesignals basierend auf dem Oszillatorsignal auf. Das Hochfrequenzmodul kann dazu eingerichtet sein, eine Frequenz und/oder eine Leistung des Oszillatorsignals zu verändern und so das Sendesignal zu generieren. Das Sendesignal kann dann etwa an eine Antenne und/oder eine Antennenanordnung übergeben bzw. geleitet werden und in Form eines Messsignals bzw. Radarsignals zur Füllstandmessung von dem Radarfüllstandmessgerät abgestrahlt werden. Des Weiteren weist das Radarfüllstandmessgerät ein Energieversorgungsmodul, eine Energieversorgung und/oder eine Energieversorgungsanordnung zur Versorgung zumindest eines Teils des Frequenzsynthesizers und des Hochfrequenzmoduls mit elektrischer Energie auf, d.h. das Energieversorgungsmodul ist zur Stromversorgung und/oder zur Spannungsversorgung eingerichtet. Zumindest der Frequenzsynthesizer und das Hochfrequenzmodul können ein Radarmodul des Radarfüllstandmessgeräts bilden. Der Frequenzsynthesizer weist eine Steuereinheit und eine Phasenregelschleife mit einem Phasenregelelement und einem Oszillator auf, wobei die Phasenregelschleife dazu eingerichtet ist, eine Frequenz des Oszillatorsignals auf einen Sollwert zu regeln, und wobei das Phasenregelelement dazu eingerichtet ist, ein Kontrollsignal für die Steuereinheit bereitzustellen, wenn die Frequenz des Oszillatorsignals den Sollwert erreicht hat. Die Steuereinheit ist dabei dazu eingerichtet, das Energieversorgungsmodul zur Versorgung des Hochfrequenzmoduls mit elektrischer Energie zu betätigen und/oder zu aktivieren, bevor das Kontrollsignal durch das Phasenregelelement bereitgestellt ist. Dies geschieht erfindungsgemäß bereits während einer Einschwingzeitdauer, in welcher die Frequenz des Oszillatorsignals auf den Sollwert geregelt wird.

Erfindungsgemäß ist das Radarfüllstandmessgerät für einen getakteten Betrieb ausgelegt, in welchem in aktiven Perioden und/oder Phasen des Betriebes ein Messsignal ausgesendet wird und in inaktiven Perioden und/oder Phasen eine Energieversorgung zumindest eines Teils des Hochfrequenzmoduls unterbrochen und/oder reduziert ist.

Die Steuereinheit kann etwa eine Recheneinheit, ein Rechenmodul, eine Logikvorrichtung und/oder einen Prozessor bezeichnen. Der Oszillator kann beispielsweise einen spannungsgesteuerten Oszillator (VCO, "voltage controlled oscillator") bezeichnen.

Die Phasenregelschleife kann allgemein einen geschlossenen Regelkreis bezeichnen, mit Hilfe dessen eine Phasenlage und/oder Frequenz des Oszillators derart geregelt werden kann, dass eine Phasenabweichung zwischen einem Referenzsignal und dem Oszillatorsignal und/oder einem daraus abgeleiteten Signal möglichst konstant ist. Das Phasenregelelement kann dabei einen PLL-Baustein ("Phase Locked Loop") bezeichnen, welcher das, z.B. von einem Referenzoszillator bereitgestellte, Referenzsignal mit dem Oszillatorsignal vergleicht. Die Werte für eine gewünschte Phasenabweichung können etwa von der Steuereinheit an das Phasenregelelement übergeben werden. Das Kontrollsignal des Phasenregelelements kann ein z.B. an einem Signalausgang des Phasenregelelements bereitgestelltes digitales Signal bezeichnen, welches anzeigt, dass die Phasenabweichung den gewünschten Wert erreicht hat und somit eine Übereinstimmung der Frequenz des Oszillatorsignals mit dem Sollwert vorliegt.

Zusammenfassend ist das erfindungsgemäße Radarfüllstandmessgerät dazu eingerichtet, im getakteten Betrieb den Frequenzsynthesizer zu aktivieren, etwa durch Betätigen des Energieversorgungsmoduls zur Versorgung des Frequenzsynthesizers mit elektrischer Energie, und während einer Einschwingzeitdauer, in welcher die Frequenz des Oszillatorsignals auf den Sollwert geregelt wird, bereits das Energieversorgungsmodul derart zu betätigen, dass auch das Hochfrequenzmodul mit elektrischer Energie versorgt wird. Auf diese Weise kann zum einen sichergestellt sein, dass, sobald der Sollwert erreicht ist und das Kontrollsignal ausgegeben wird, alle Komponenten des Radarfüllstandmessgeräts betriebsbereit sind und unmittelbar eine Füllstandmessung durchgeführt werden kann. Zum anderen kann anhand des Kontrollsignals eine Funktionsfähigkeit des Synthesizers vor Aussenden eines Messsignals überprüft werden, d.h. das Radarfüllstandmessgerät kann eine Überwachung des Frequenzsynthesizers basierend auf dem Kontrollsignal als Bedingung für ein als Antwort auf das Kontrollsignal erfolgendes Aussenden des Messsignals erlauben. Dabei können der Frequenzsynthesizer und das Hochfrequenzmodul zeitgleich oder zeitlich versetzt zueinander durch entsprechendes Betätigen des Energieversorgungsmoduls mit elektrischer Energie versorgt werden, und bei Vorliegen des Kontrollsignals kann das Sendesignal an die Antenne übergeben und ein Messsignal über die Antenne abgestrahlt werden.

Gemäß einer Ausführungsform ist die Steuereinheit dazu eingerichtet, als Antwort auf das Kontrollsignal eine Füllstandmessung durchzuführen. Die Messung kann insbesondere gestartet werden, indem das Hochfrequenzmodul durch die Steuereinheit angewiesen wird, das Sendesignal zum Ermitteln des Füllstandes an eine Antenne und/oder eine Antennenanordnung des Radarfüllstandmessgeräts auszugeben. Allgemein kann "Messung starten" bedeuten, dass ein Messsignal über einen Sendekanal des Radarfüllstandmessgeräts abgestrahlt wird und/oder über einen Empfangskanal ein reflektiertes Radarsignal empfangen wird, welches dann zur Ermittlung des Füllstandes ausgewertet werden kann. Auch kann die Messung gestartet werden, indem eine Frequenzrampe in einem FMCW-Betrieb ("Frequency Modulated Continuous Wave") und/oder SFCW-Betrieb ("Stepped Frequency Continuous Wave") ausgehend von einer Startfrequenz durchfahren wird.

Gemäß einer Ausführungsform ist die Steuereinheit dazu eingerichtet, während eines Durchfahrens einer Frequenzrampe durch den Frequenzsynthesizer das Kontrollsignal kontinuierlich zu überwachen. Somit kann während des Durchfahrens der Frequenzrampe kontinuierlich die Funktionstüchtigkeit des Frequenzsynthesizers überprüft, überwacht und/oder sichergestellt werden.

Gemäß einer Ausführungsform ist die Steuereinheit dazu eingerichtet, eine nach Ablauf einer definierbaren, programmierbaren und/oder dynamisch anpassbaren Wartezeitdauer eine Füllstandmessung durchzuführen. Die Wartezeitdauer kann dabei derart gewählt sein, dass bei Ablauf derselben sichergestellt sein kann, dass die Frequenz des Oszillatorsignals den Sollwert erreicht hat und sich das Hochfrequenzmodul in einem eingeschwungenen und/oder betriebsbereiten Zustand befindet. Allgemein kann das Radarfüllstandmessgerät dazu eingerichtet sein, dass nach Betätigung des Energieversorgungsmoduls zur Versorgung des Frequenzsynthesizers und des Hochfrequenzmoduls mit elektrischer Energie sowie nach Ablauf der Wartezeitdauer und bei Vorliegen des Kontrollsignals eine Füllstandmessung gestartet wird.

Gemäß einer Ausführungsform weist das Energieversorgungsmodul einen ersten Ausgang zur Versorgung des Frequenzsynthesizers und einen zweiten Ausgang zur Versorgung des Hochfrequenzmoduls auf, wobei der erste Ausgang und der zweite Ausgang unabhängig voneinander, getrennt voneinander und/oder separat durch die Steuereinheit betätigbar sind. Alternativ oder zusätzlich weist das Energieversorgungsmodul eine erste Energieversorgungseinheit zur Versorgung des Frequenzsynthesizers mit elektrischer Energie und eine zweite Energieversorgungseinheit zur Versorgung des Hochfrequenzmoduls mit elektrischer Energie auf, wobei die erste Energieversorgungseinheit und die zweite Energieversorgungseinheit unabhängig voneinander, getrennt voneinander und/oder separat durch die Steuereinheit betätigbar sind. Mit anderen Worten ist das Energieversorgungsmodul derart ausgestaltet, dass der Frequenzsynthesizer und das Hochfrequenzmodul unabhängig voneinander und/oder separat mit Energie versorgt und/oder betrieben werden können.

Gemäß einer Ausführungsform weist der Frequenzsynthesizer ferner einen Referenzoszillator zur Ausgabe eines Referenzsignals an die Phasenregelschleife auf. Der Referenzoszillator kann das Referenzsignal etwa dem Phasenregelelement bereitstellen, so dass eine vorgegebene Phasenabweichung zwischen Referenzsignal und Oszillatorsignal eingestellt werden kann.

Gemäß einer Ausführungsform weist die Phasenregelschleife ferner ein Schleifenfilter zur Filterung eines von dem Phasenregelelement an den Oszillator übergebenen Signals auf. Das Schleifenfilter kann somit zwischen Phasenregelelement und Oszillator angeordnet und/oder geschaltet sein.

Gemäß einer Ausführungsform weist das Radarfüllstandmessgerät ferner ein Kontrollmodul zur Überwachung einer dem Hochfrequenzmodul durch das Energieversorgungsmodul zugeführten elektrischen Energie auf, wobei das Kontrollmodul dazu eingerichtet ist, bei Überschreiten oder Unterschreiten vorgegebener Werte für die Energieversorgung des Hochfrequenzmoduls ein Steuersignal an die Steuereinheit auszugeben. Das Kontrollmodul kann etwa eine Energieversorgungsüberwachungseinrichtung zur Strom- und/oder Spannungsüberwachung bezeichnen. Steigt etwa ein Energieverbrauch des Hochfrequenzmoduls über einen gewissen Schwellenwert oder fällt unter einen gewissen weiteren Schwellenwert kann dies ein Indikator für eine Fehlfunktion einer Komponente des Hochfrequenzmoduls sein. Somit kann mit Hilfe des Kontrollmoduls in vorteilhafter Weise während des Betriebes die Funktionstüchtigkeit des Hochfrequenzmoduls überprüft werden.

Gemäß einer Ausführungsform weist das Hochfrequenzmodul einen ersten Koppler, einen zweiten Koppler, einen Leistungsregler zur Regelung einer Leistung des Sendesignals und einen Leistungsdetektor zur Überprüfung der Leistung auf. Dabei ist ein Eingang des ersten Kopplers mit einem Ausgang des Frequenzsynthesizers verbunden und ein Ausgang des ersten Kopplers ist mit einem Eingang des Leistungsreglers verbunden. Mit anderen Worten wird das Oszillatorsignal über den ersten Koppler an den Leistungsregler übergeben. Weiter ist ein Ausgang des Leistungsreglers mit einem Eingang des zweiten Kopplers verbunden, und der zweite Koppler ist dazu eingerichtet, dem Leistungsdetektor einen Teil der Leistung des Sendesignals zuzuführen. Der erste und zweite Koppler können jeweils einen Richtkoppler, beispielsweise einen Leistungsteiler und/oder einen Hybridkoppler, bezeichnen. Der Leistungsregler kann insbesondere ein variabler und/oder adaptiver Leistungsregler sein. In allgemeiner Betrachtung weist das Hochfrequenzmodul einen Koppler auf, der einen Teil des Sendesignals auskoppelt und einem Leistungsdetektor zur Ermittlung der Leistung zuführt.

Gemäß einer Ausführungsform ist der Leistungsdetektor mit der Steuereinheit verbunden, wobei die Steuereinheit dazu eingerichtet ist, basierend auf einem von dem Leistungsdetektor bereitgestellten und mit der Leistung des Sendesignals korrelierenden Signals die Leistung des Sendesignals zu ermitteln. Dabei ist die Steuereinheit mit dem Leistungsregler gekoppelt und zur Regelung des Leistungsreglers eingerichtet, insbesondere zur Regelung basierend auf der ermittelten Leistung des Sendesignals. Mit Hilfe des Leistungsdetektors kann so in vorteilhafter Weise die Leistung des Sendesignals überprüft werden, bevor das Messsignal über die Antenne ausgesendet wird.

Gemäß einer Ausführungsform ist die Steuereinheit dazu eingerichtet, während einer Einschwingzeitdauer durch Regelung des Leistungsreglers die Leistung des Sendesignals zu minimieren und/oder einen Minimalwert der Leistung einzustellen. Alternativ oder zusätzlich ist die Steuereinheit dazu eingerichtet, unmittelbar vor Durchführung einer Füllstandmessung die Leistung des Sendesignals auf einen gewünschten und/oder vorbestimmten Leistungssollwert zu erhöhen. Beispielsweise kann der Leistungsregler von einer niedrigen Verstärkung zu einer gewünschten höheren Verstärkung unmittelbar vor Beginn des Durchfahrens einer Frequenzrampe geschalten werden. Dadurch kann in vorteilhafter Weise ein Aussenden unerwünschter Messsignale während inaktiver Perioden im getakteten Betrieb und/oder während der Einschwingzeitdauer des Frequenzsynthesizers vermieden werden.

Gemäß einer Ausführungsform ist der Leistungsregler ein variabler Verstärker oder ein variables Dämpfungsglied. Damit kann zuverlässig die Leistung des Sendesignals geregelt werden.

Ein weiterer Aspekt der Erfindung betrifft ein Verfahren zum Betreiben eines Radarfüllstandmessgeräts, welches einen Frequenzsynthesizer zum Erzeugen eines Oszillatorsignals, ein Hochfrequenzmodul zum Erzeugen eines Sendesignals basierend auf dem Oszillatorsignal und ein Energieversorgungsmodul zur Versorgung des Frequenzsynthesizers und des Hochfrequenzmoduls mit elektrischer Energie aufweist. Das Verfahren weist die folgenden Schritte auf:
- Betätigen des Energieversorgungsmoduls zur Versorgung des Frequenzsynthesizers mit elektrischer Energie;
- Regeln, mit einer Phasenregelschleife des Frequenzsynthesizers, einer Frequenz des Oszillatorsignals auf einen vorgegebenen Sollwert;
- Bereitstellen, durch ein Phasenregelelement der Phasenregelschleife, eines Kontrollsignals, wenn die Frequenz des Oszillatorsignals mit dem Sollwert übereinstimmt; und
- Betätigen des Energieversorgungsmoduls zur Versorgung des Hochfrequenzmoduls mit elektrischer Energie bevor das Kontrollsignal bereitgestellt ist.

Merkmale und Elemente des Radarfüllstandmessgeräts, so wie obenstehend und untenstehend beschrieben, können Merkmale und Schritte des Verfahrens, so wie obenstehend und untenstehend beschrieben, sein. Ebenso können Merkmale und Schritte des Verfahrens Merkmale und Elemente des Radarfüllstandmessgeräts sein.

Ein weiterer Aspekt der Erfindung betrifft ein Programmelement, das, wenn es auf einer Steuereinheit eines Radarfüllstandmessgeräts ausgeführt wird, das Radarfüllstandmessgerät anleitet, die Schritte des Verfahrens, so wie obenstehend und untenstehend beschrieben, auszuführen.

Ein weiterer Aspekt der Erfindung betrifft ein computerlesbares Medium, auf dem ein Programmelement gespeichert, das, wenn es auf einer Steuereinheit eines Radarfüllstandmessgeräts ausgeführt wird, das Radarfüllstandmessgerät anleitet, die Schritte des Verfahrens, so wie obenstehend und untenstehend beschrieben, auszuführen.

Im Folgenden werden Ausführungsbeispiele der Erfindung unter Bezugnahme auf die beigefügten Figuren beschrieben. Dabei können gleiche Bezugszeichen gleiche, gleichwirkende oder ähnliche Elemente bezeichnen.

### Kurze Beschreibung der Figuren

Fig. 1 zeigt schematisch ein Radarfüllstandmessgerät gemäß einem Ausführungsbeispiel der Erfindung.
Fig. 2 zeigt schematisch ein Flussdiagramm zur Illustration von Schritten eines Verfahrens zum Betreiben des Radarfüllstandmessgeräts aus Fig. 1.
Fig. 3 zeigt schematisch ein Radarfüllstandmessgerät gemäß einem Ausführungsbeispiel der Erfindung.
Fig. 4 zeigt ein Hochfrequenzmodul für ein Radarfüllstandmessgerät gemäß einem Ausführungsbeispiel der Erfindung.
Fig. 5 zeigt schematisch ein Flussdiagramm zur Illustration von Schritten eines Verfahrens zum Betreiben eines Radarfüllstandmessgeräts mit dem Hochfrequenzmodul aus Fig. 4.

Die Darstellungen in den Figuren sind lediglich schematisch und nicht maßstabsgetreu.

### Detaillierte Beschreibung von Ausführungsbeispielen

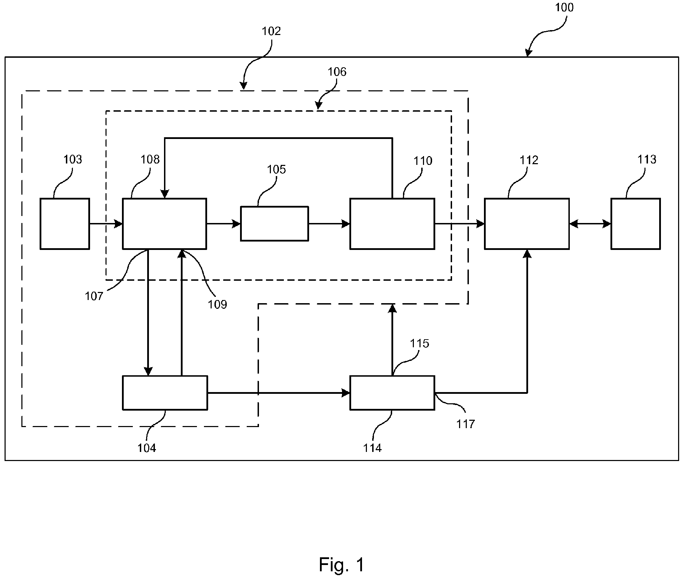

Fig. 1 zeigt schematisch ein Radarfüllstandmessgerät 100 gemäß einem Ausführungsbeispiel der Erfindung, wobei die Komponenten des Radarfüllstandmessgeräts 100 als Blockschaltbild dargestellt sind.

Das Radarfüllstandmessgerät 100 weist einen Frequenzsynthesizer 102 zum Erzeugen eines Oszillatorsignals auf. Der Frequenzsynthesizer 102 umfasst dabei eine Steuereinheit 104, einen Referenzoszillator 103 und eine Phasenregelschleife 106.

Die Phasenregelschleife 106 weist ein Phasenregelelement 108 bzw. einen PLL-Baustein 108 auf, welchem über einen entsprechenden Eingang ein von dem Referenzoszillator 103 erzeugtes Referenzsignal zugeführt wird. Weiter weist die Phasenregelschleife 106 ein Schleifenfilter 105 auf, welches zwischen das Phasenregelelement 108 und einen Oszillator 110 geschaltet ist. Die Phasenregelschleife 106 stellt einen geschlossenen Regelkreis dar, mit Hilfe dessen eine Phasenlage und/oder Frequenz des Oszillators 110 dadurch geregelt werden kann, dass eine Phasenabweichung zwischen dem Referenzsignal und dem Oszillatorsignal und/oder einem daraus abgeleiteten Signal möglichst konstant gehalten wird. Der Oszillator 110 kann etwa ein spannungsgesteuerter Oszillator (VCO) sein.

Das Phasenregelelement 108 kann über einen Steuereingang 109 Steuersignale von der Steuereinheit 104 empfangen. Beispielsweise kann über den Steuereingang 109 ein Sollwert einer Frequenz des Oszillatorsignals eingestellt werden und/oder das Phasenregelelement 108 kann programmiert werden. Wenn die Frequenz des Oszillatorsignals mit dem Sollwert übereinstimmt, wird über einen Signalausgang 107 ein digitales Kontrollsignal an die Steuereinheit 104 ausgegeben. Das Kontrollsignal wird häufig auch als "lock-detect" Signal bezeichnet.

Weiter weist das Radarfüllstandmessgerät 100 ein Hochfrequenzmodul 112 auf, welches basierend auf dem Oszillatorsignal ein Sendesignal erzeugt.

Ferner weist das Radarfüllstandmessgerät 100 eine Antenne 113 und/oder eine Antennenanordnung 113 auf, welcher das Sendesignal zugeführt wird und über welche ein auf dem Sendesignal basierendes Messsignal zur eigentlichen Füllstandmessung abgestrahlt werden kann.

Des Weiteren weist das Radarfüllstandmessgerät 100 ein Energieversorgungsmodul 114 zur Versorgung des Frequenzsynthesizers 102 und des Hochfrequenzmoduls 112 mit elektrischer Energie auf. Das Energieversorgungsmodul 114 ist mit der Steuereinheit 104 gekoppelt und/oder verbunden und kann über die Steuereinheit 104 betätigt und/oder gesteuert werden. Der Frequenzsynthesizer 102 und das Hochfrequenzmodul 112 können dabei getrennt voneinander, unabhängig voneinander und/oder separat mit Energie versorgt werden. Dazu kann das Energieversorgungsmodul 114 einen ersten Ausgang 115 bzw. eine erste Energieversorgungseinheit 115 zur Versorgung des Frequenzsynthesizers 102 und einen zweiten Ausgang 117 bzw. eine zweite Energieversorgungseinheit 117 zur Versorgung des Hochfrequenzmoduls 112 aufweisen, welche unabhängig von der Steuereinheit 104 betätigt werden können.

Allgemein ist die Steuereinheit 104 des erfindungsgemäßen Radarflillstandmessgeräts 100 dazu eingerichtet, das Energieversorgungsmodul 114 zur Versorgung des Hochfrequenzmoduls 112 mit elektrischer Energie zu betätigen und/oder zu aktivieren, bevor das Kontrollsignal durch das Phasenregelelement 108 bereitgestellt ist, d.h. bevor die Frequenz des Oszillatorsignals mit dem Sollwert übereinstimmt. Somit kann etwa während einer Einschwingzeitdauer, während der die Frequenz des Oszillatorsignals auf den Sollwert geregelt wird, bereits das Hochfrequenzmodul 112 aktiviert werden. Ferner ist die Steuereinheit 104 dazu eingerichtet, als Antwort auf das Kontrollsignal eine Füllstandmessung durchzuführen, etwa indem ausgehend von einer Startfrequenz eine Frequenzrampe durchfahren wird.

Eine Funktionsweise des erfindungsgemäßen Radarfüllstandmessgeräts lässt sich wie folgt zusammenfassen. Das Radarfüllstandmessgerät 100 kann in unterschiedlichen Betriebsarten betrieben werden, wobei mit Hilfe des Frequenzsynthesizers 102 Sendesignale und/oder Messsignale mit unterschiedlichen Modulationsarten erzeugt werden können. Bei radarbasierten Füllstandmessungen gängige Betriebsarten und/oder Modulationsarten sind FMCW ("frequency modulated continuous wave") und SFCW ("stepped frequency continuous wave"). Das Energieversorgungsmodul 114 versorgt die einzelnen Komponenten des Frequenzsynthesizers 102 und aktive Komponenten des Hochfrequenzmoduls 112 mit elektrischer Energie. Wie voranstehend erläutert, kann die Versorgung des Frequenzsynthesizers 102 und des Hochfrequenzmoduls 112 von der Steuereinheit 104 separat betätigt, d.h. ein- und ausgeschaltet werden. Spannungsversorgungen der Steuereinheit 104 und des Referenzoszillators 103 sind aus Vereinfachungsgründen in Fig. 1 nicht gezeigt.

Wird nun die Energieversorgung des Frequenzsynthesizers 102 aktiviert, so regelt die Phasenregelschleife 106 die Frequenz des Oszillators 110 während einer Einschwingzeitdauer auf den vorgegebenen und/oder gewünschten Sollwert. Zeitgleich oder zeitlich verzögert wird ebenso die Energieversorgung des Hochfrequenzmoduls 112 aktiviert, so dass auch dieses während der Einschwingzeitdauer, bei deren Ablauf und/oder nach einer bestimmten weiteren Wartezeitdauer vollständig betriebsbereit ist. Stimmt nun die Frequenz des Oszillatorsignals mit dem Sollwert überein, d.h. steht der Oszillator 110 auf seiner Sollfrequenz und ist die Phasenregelschleife 106 eingerastet, so gibt das Phasenregelelement 108 das Kontrollsignal bzw. das "lock detect" Signal an die Steuereinheit 104 aus. Mit Hilfe des Kontrollsignals lässt sich so in vorteilhafter Weise die korrekte Ausgangsfrequenz des Oszillators 110 bzw. die korrekte Frequenz des Oszillatorsignals und somit auch die korrekte Frequenz des an die Antenne 113 übergebenen Sendesignals sowie des mit der Antenne 113 abgestrahlten Messsignals überwachen. Mit dem erfindungsgemäßen Radarfüllstandmessgerät 100 kann so in vorteilhafter Weise die Füllstandmessung bzw. die Abstandmessung erst dann in Gang gesetzt werden, d.h. etwa die Frequenzrampe beispielsweise bei Nutzung der FMCW- oder SFCW-Modulation erst dann gestartet werden, wenn die Frequenz des Oszillators die korrekte Startfrequenz der Frequenzrampe erreicht hat. Somit kann für jede Füllstandmessung auch die korrekte Funktion des Frequenzsynthesizers 102 sichergestellt werden. Zudem kann die Funktionalität und/oder Funktionstüchtigkeit des Frequenzsynthesizers 102 auch kontinuierlich während des Betriebes des Radarfüllstandmessgeräts 100 überprüft werden.

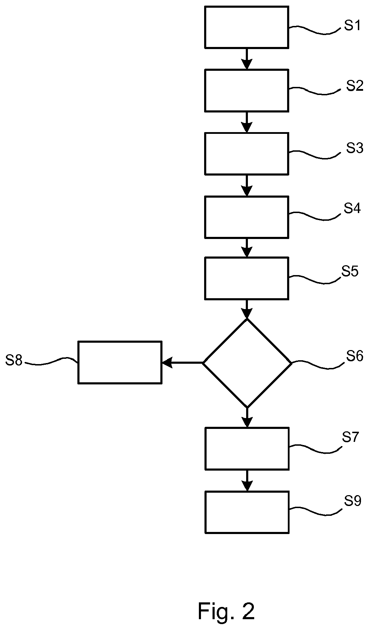

Fig. 2 zeigt schematisch ein Flussdiagramm zur Illustration von Schritten eines Verfahrens zum Betreiben des Radarfüllstandmessgeräts 100 aus Fig. 1.

In einem ersten Schritt S1 wird eine Messroutine gestartet und in einem zweiten Schritt S2 wird mit der Steuereinheit 104 das Energieversorgungsmodul 114 betätigt, so dass der Frequenzsynthesizer 102 bzw. dessen Komponenten über den ersten Ausgang 115 des Energieversorgungsmoduls 114 mit elektrischer Energie versorgt werden. Insbesondere wird in Schritt S2 die Energieversorgung des Referenzoszillators 103, des Phasenregelelements 108, des Oszillators 110 und gegebenenfalls des Schleifenfilters 105 von der Steuereinheit 104 eingeschaltet.

In einem weiteren Schritt S3 wird das Phasenregelelement 108 von der Steuereinheit 104 initialisiert, wobei beispielsweise über den Steuereingang 109 ein Register des Phasenregelelements 108 von der Steuereinheit 104 programmiert werden kann und etwa ein Sollwert für die Frequenz des Oszillatorsignals eingestellt werden kann. Sobald die Initialisierung des Phasenregelelements 108 abgeschlossen ist, wird die Frequenz des Oszillatorsignals und/oder die Frequenz des Oszillators 110 auf den Sollwert, d.h. auf die Sollfrequenz, geregelt. Im Falle eines FMCW- oder SFCW-Betriebes kann der Sollwert der Frequenz etwa eine Startfrequenz der Frequenzrampe sein. Abhängig von der Auslegung des Phasenregelkreises 106 kann das Regeln der Frequenz auf den Sollwert eine gewisse Einschwingzeitdauer in Anspruch nehmen.

Während der Einschwingzeitdauer, d.h. während des Einregelns des Frequenzsynthesizers 102 und/oder des Oszillators 110, wird die Energieversorgung der aktiven Komponenten des Hochfrequenzmoduls 112 in einem weiteren Schritt S4 angeschaltet. Dazu wird das Energieversorgungsmodul 114 entsprechend durch die Steuereinheit 104 betätigt, etwa durch Aktivieren des zweiten Ausgangs 117 des Energieversorgungsmoduls 114.

In einem weiteren Schritt S5 wird durch die Steuereinheit 104 eine gewisse definierbare Wartezeitdauer abgewartet. Die Wartezeitdauer kann etwa in der Steuereinheit 104 bzw. einem entsprechenden Speicher hinterlegt sein. Die Wartezeitdauer kann auch etwa durch die Steuereinheit 104 ermittelt und/oder dynamisch angepasst werden, beispielsweise in Abhängigkeit des Sollwertes oder dergleichen. Die Wartezeitdauer sollte dabei so lange bemessen und/oder gewählt sein, dass die Frequenz des Oszillators 110 und/oder des Frequenzsynthesizers 102 am Ende bzw. bei Ablauf der Wartezeitdauer den Sollwert erreicht hat, d.h. auf der Startfrequenz steht, und sich das Hochfrequenzmodul 112 somit nach dem Anschalten der Versorgungsspannung und/oder dem Betätigen des Energieversorgungsmoduls 114 in einem eingeschwungenen Zustand befindet.

In einem weiteren Schritt S6 wird das Kontrollsignal ("lock detect" Signal) des Phasenregelelements 108 von der Steuereinheit 104 abgefragt. Mit anderen Worten kann die Steuereinheit 104 nach Ablauf der Wartezeitdauer in Schritt S6 überprüfen, ob das Phasenregelelement 108 das Kontrollsignal am Signalausgang 107 bereitstellt. D.h. es wird in Schritt S6 überprüft, ob der die Frequenz des Oszillatorsignals mit dem Sollwert übereinstimmt, der Oszillator 110 also auf der Startfrequenz angekommen ist und sich im eingeschwungenen Zustand befindet. Damit wird auch überprüft, ob der Frequenzsynthesizer 102 bereit ist die Frequenzrampe durchzustimmen und/oder durchzufahren.

Ist das Kontrollsignal in Schritt S6 durch das Phasenregelelement 108 bereitgestellt, so wird die Füllstandmessung in einem Schritt S7 gestartet und etwa die Frequenzrampe durchgefahren, d.h. als Antwort auf das Vorliegen des Kontrollsignals wird in Schritt S7 eine Füllstandmessung durch Abstrahlen eines Messsignals über die Antenne 113 und/oder durch Empfangen eines an einem Füllgut reflektierten Radarsignals durchgeführt.

Ist dagegen in Schritt S6 das Kontrollsignal nicht durch das Phasenregelelement 108 bereitgestellt, so kann entweder in einem Schritt S8 die Messroutine abgebrochen werden oder es kann eine zusätzliche Wartezeitdauer abgewartet und/oder in die Messroutine eingefügt werden, indem beispielsweise Schritt S5 erneut durchgeführt wird.

Schließlich kann, etwa nach erfolgreichem Durchfahren der Frequenzrampe, in einem optionalen Schritt S9 die Energieversorgung des Frequenzsynthesizers 102 und des Hochfrequenzmoduls 112 durch erneutes entsprechendes Betätigen des Energieversorgungsmoduls 114 abgeschaltet werden.

Während der gesamten Messroutine und/oder während des Durchfahrens der Frequenzrampe kann das Kontrollsignal kontinuierlich durch die Steuereinheit 104 überwacht werden, so dass bei einer Fehlfunktion unmittelbar eingegriffen und/oder gegebenenfalls die Messung verworfen werden kann.

Gleichsam kann das Kontrollsignal des Phasenregelelements 108 des erfindungsgemäßen Radarfüllstandmessgeräts 100 zur Funktionskontrolle des Frequenzsynthesizers 102 herangezogen werden.

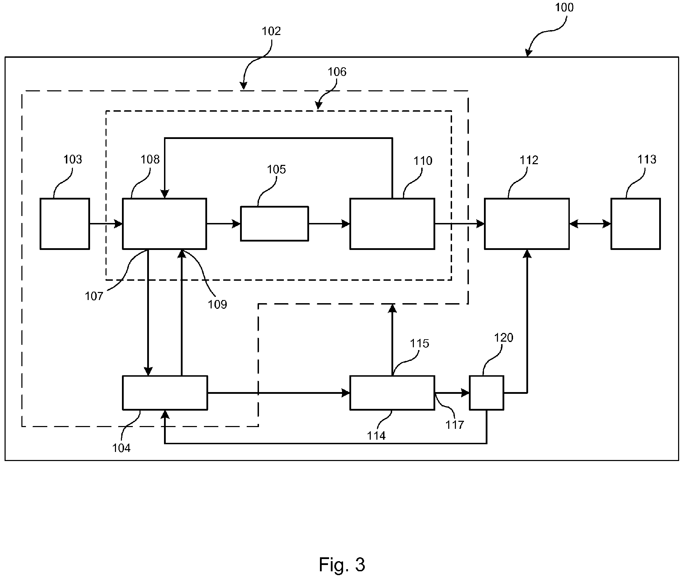

Fig. 3 zeigt schematisch ein Radarfüllstandmessgerät 100 gemäß einem Ausführungsbeispiel der Erfindung. Sofern nicht anders beschrieben weist das Radarfüllstandmessgerät 100 der Fig. 3 dieselben Elemente und Merkmale wie das Radarfüllstandmessgerät 100 der Fig. 1 auf. Auch wird, sofern nicht anders beschrieben, das Radarfüllstandmessgerät 100 der Fig. 3 wie bei Fig. 2 erläutert betrieben.

Zusätzlich zu den in Fig. 1 beschriebenen Komponenten weist das Radarfüllstandmessgerät 100 der Fig. 3 ein Kontrollmodul 120 zur Überwachung einer dem Hochfrequenzmodul 112 durch das Energieversorgungsmodul 114 zugeführten elektrischen Energie auf, wobei das Kontrollmodul 120 dazu eingerichtet ist, bei Überschreiten oder Unterschreiten vorgegebener Werte für die Energieversorgung des Hochfrequenzmoduls 112 ein Steuersignal an die Steuereinheit 104 auszugeben. Das Kontrollmodul 120 ist somit zwischen das Energieversorgungsmodul 114 und das Hochfrequenzmodul 112 geschaltet. Das Kontrollmodul 120 kann etwa ein Strommesser oder Stromfühler und/oder ein Spannungsmesser zur Ermittlung einer dem Hochfrequenzmodul 112 zugeführten Stromstärke und/oder einer Spannung aufweisen.

Im Gegensatz zur Überprüfung der Funktionstüchtigkeit des Frequenzsynthesizers 102 unter Verwendung des Kontrollsignals, kann eine Kontrolle der Funktionstüchtigkeit des Hochfrequenzmoduls 112 schwieriger sein, da bei analogen aktiven Komponenten des Hochfrequenzmoduls 112, wie z.B. Frequenzvervielfacher, Mischer und/oder Verstärker, im Allgemeinen keine digitalen Ausgangssignale zur Funktionskontrolle zur Verfügung stehen. Ein geeigneter Indikator für die korrekte Funktion der Komponenten des Hochfrequenzmoduls 112 können jedoch die Einhaltung von bestimmten Spannungsgrenzen und/oder Stromgrenzen der Energieversorgung darstellen. Mit anderen Worten kann davon ausgegangen werden, dass beispielsweise bei zu geringer Versorgungsspannung und/oder Stromaufnahme eines Bauteils des Hochfrequenzmoduls 112 auch eine Funktion des Hochfrequenzmoduls 112 beeinträchtigt ist.

Mit dem in Fig. 3 gezeigten Radarfüllstandmessgerät 100 kann so in vorteilhafter Weise die Funktionstüchtigkeit des Hochfrequenzmoduls 112 vor Aussenden eines Messsignals und/oder kontinuierlich während des Betriebes überprüft werden. Im Ablauf der in Fig. 2 gezeigten Messroutine bzw. des in Fig. 2 illustrierten Verfahrens kann die Funktionstüchtigkeit des Hochfrequenzmoduls 112 durch das Kontrollmodul 120 unmittelbar vor und/oder gleichzeitig mit Überprüfung des Vorliegens des Kontrollsignals in Schritt S6 erfolgen. So kann in Schritt S6 neben der Abfrage des Vorliegens des Kontrollsignals auch abgefragt und/oder überprüft werden, ob die vorgesehenen Werte der Energieversorgung, d.h. die mit dem Kontrollmodul 120 ermittelten Stromversorgungswerte und/oder Spannungsversorgungswerte, des Hochfrequenzmoduls 112 in den definierten Grenzen liegen. Ist dies der Fall und liegt in Schritt S6 zudem das Kontrollsignal vor, so kann wie bei Fig. 2 beschrieben die Frequenzrampe durchgefahren werden. Liegen dagegen Werte der Energieversorgung außerhalb der vorgesehenen Werte, d.h. sind Stromversorgungswerte und/oder Spannungsversorgungswerte des Hochfrequenzmoduls 112 außerhalb der spezifizierten Grenzen, so wird nach einer weiteren optionalen Wartezeitdauer die Messroutine abgebrochen, es wird in Schritt S5 neu gestartet oder die Messroutine wird gegebenenfalls komplett neu gestartet.

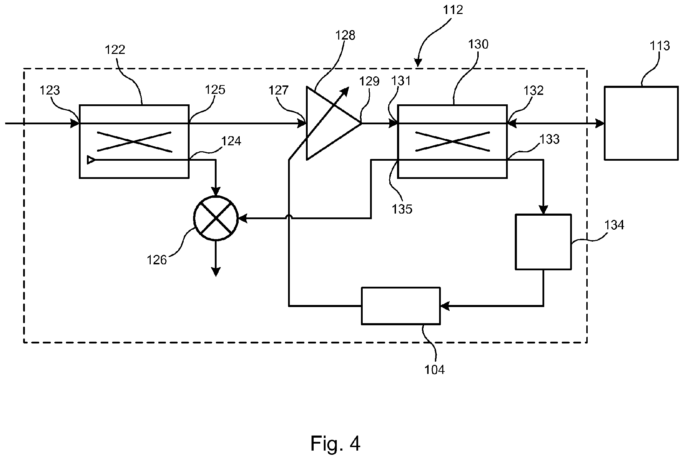

Fig. 4 zeigt eine Ausführungsform eines Hochfrequenzmoduls 112 für ein Radarfüllstandmessgerät 100 gemäß einem Ausführungsbeispiel. Sofern nicht anders beschrieben, weist das Hochfrequenzmodul 112 der Fig. 4 dieseleben Elemente und Merkmale wie die in vorangegangenen Figuren beschriebenen Hochfrequenzmodule 112 auf. Insbesondere kann das Hochfrequenzmodul beispielsweise jeweils einen oder meherere Frequenzvervielfacher, Mischer, Verstärker und/oder Koppler, Richtkoppler aufweisen.

Das Hochfrequenzmodul 112 weist einen ersten Koppler 122 auf, welchem über einen Eingang 123 das Oszillatorsignal des Frequenzsynthesizers 102 bzw. des Oszillators 110 zugeführt wird. Der erste Koppler 122 kann etwa als Leistungsteiler 122 ausgebildet sein und dazu eingerichtet sein, einen Teil einer Signalleistung des Oszillatorsignals auszukoppeln und über einen Ausgang 124 einer Mischvorrichtung 126 bzw. einem Mischer 126 zuzuführen. Zwischen einem Ausgang des Frequenzsynthesizers 102 und dem Eingang 123 des ersten Kopplers 122 kann auch noch eine Frequenzumsetzung erfolgen, beispielsweise durch mittels eines Vervielfachers und/oder eines Mischers.

Ein Ausgang 125 des ersten Kopplers 122 ist mit einem Eingang 127 eines Leistungsreglers 128 des Hochfrequenzmoduls 112 verbunden. Das Oszillatorsignal wird somit von dem Frequenzsynthesizer 102 an den ersten Koppler 122 geleitet, wobei ein Teil der Leistung ausgekoppelt wird und basierend auf dem Oszillatorsignal das Sendesignal generiert wird, welches dem Leistungsregler 128 zugeführt wird. Der Leistungsregler 128 kann dabei als variabler und/oder adaptiver Verstärker 128 ausgestaltet sein, wobei eine Verstärkung des Sendesignals über die Steuereinheit 104 geregelt werden kann. Alternativ kann der Leistungsregler 128 auch als variables und/oder adaptives Dämpfungsglied ausgebildet sein.

Über einen Ausgang 129 des Leistungsreglers 128 wird das Sendesignal einem Eingang 131 eines zweiten Kopplers 130 bzw. Leistungsteilers 130 des Hochfrequenzmoduls 112 zugeführt. Ein Ausgang 132 des zweiten Kopplers 130 ist mit der Antenne 113 gekoppelt, über welche das Sendesignal dann in Form eines Messsignals zur eigentlichen Füllstandmessung abgestrahlt werden kann.

Ein weiterer Ausgang 133 des zweiten Kopplers 130 ist mit einem Leistungsdetektor 134 des Hochfrequenzmoduls 112 verbunden, so dass über den weiteren Ausgang 133 ein Teil der Leistung des Sendesignals dem Leistungsdetektor 134 zugeführt werden kann. Der Leistungsdetektor 134 ist wiederum mit der Steuereinheit 104 verbunden. Der Leistungsdetektor 134 ist dazu eingerichtet, ein mit der Leistung des Sendesignals korrelierendes Signal zu erzeugen und der Steuereinheit 104 zuzuführen. In Kenntnis des über den zweiten Koppler 130 ausgekoppelten Teils der Leistung des Sendesignals kann die Steuereinheit 104 dann die Leistung des Sendesignals ermitteln, berechnen und/oder bestimmen. Somit kann in vorteilhafter Weise mittels des Leistungsdetektors 134 sowie der Steuereinheit 104 die Sendeleistung des Hochfrequenzmoduls 112 und/oder die Leistung des Sendesignals überprüft und/oder kontrolliert werden.

Der zweite Koppler 130 weist einen Ausgang 135 auf, über welchen ein über die Antenne 113 empfangenes und etwa an einem Füllgut reflektiertes Radarsignal der Mischvorrichtung 126 zugeführt wird. Basierend auf den über den Ausgang 124 des ersten Kopplers 122 und über den Ausgang 135 des zweiten Kopplers 130 der Mischvorrichtung 126 zugeführten Signale mischt die Mischvorrichtung 126 ein Zwischenfrequenzsignal, welches zur Bestimmung des Füllstandes weiterverarbeitet werden kann.

Ein weiterer vorteilhafter Aspekt des erfindungsgemäßen Radarfüllstandmessgeräts 100 ist, insbesondere im Hinblick auf einen getakteten Betrieb, dass die Steuereinheit 104 dazu eingerichtet ist, während der Einschwingzeitdauer des Frequenzsynthesizers 102 und/oder des Oszillators 110, d.h. bis die Frequenz des Oszillatorsignals den Sollwert erreicht hat, durch Regelung des Leistungsreglers 128 die Leistung des Sendesignals zu minimieren, gering zu halten und/oder einen Minimalwert der Verstärkung einzustellen und die Verstärkung erst nach der Einschwingzeitdauer und/oder bei Vorliegen des Kontrollsignals auf den gewünschten Wert zu erhöhen. Alternativ oder zusätzlich ist die Steuereinheit 104 dazu eingerichtet, unmittelbar vor Durchführung einer Füllstandmessung die Leistung des Sendesignals auf einen Leistungssollwert zu erhöhen und/oder zu regeln, d.h. den gewünschten Wert der Verstärkung einzustellen. Zum einen kann so das unerwünschte Aussenden eines Messsignals vermieden werden und zum anderen kann Energie eingespart werden.

Im Folgenden ist die Funktionsweise des Hochfrequenzmoduls 112 zusammengefasst. Das in Fig. 4 gezeigte Hochfrequenzmodul 112 mit den als Blockschaltbild dargestellten Komponenten kann vorteilhaft in einem Radarfüllstandmessgerät 100 zur Füllstandmessung mit FMCW- und/oder SFCW-Modulation eingesetzt werden. Das Hochfrequenzmodul 112 der Fig. 4 kann somit in den Radarfüllstandmessgeräten 100 der Figuren 1 und 3 eingesetzt werden. Aus Vereinfachungsgründen ist eine Energieversorgung der aktiven Komponenten des Hochfrequenzmoduls 112 in Fig. 4 nicht dargestellt. Das Oszillatorsignal gelangt zum ersten Koppler 122 und wird dort aufgeteilt in einen LO-Anteil bzw. ein LO-Signal ("Local Oscillator") für die Mischvorrichtung 126 und einen Anteil, der als Sendesignal über den einstellbaren Leistungsregler 128 an den zweiten Koppler 130 weitergeleitet wird. In dem zweiten Koppler 130 wird das Sendesignal erneut aufgeteilt, in einen Sendeanteil, welcher an die Antenne 113 weitergeleitet und als Messsignal abgesendet wird und einen Anteil, welcher an den Leistungsdetektor 134 geleitet wird. Das Messsignal wird an der Füllgutoberfläche reflektiert, gelangt zurück zur Antenne 113 und wird über den zweiten Koppler 130 zur Mischvorrichtung 126 weitergeleitet. In der Mischvorrichtung 126 erfolgt mit Hilfe des LO-Signals eine Umsetzung des über die Antenne 113 empfangenen Signals in ein Zwischenfrequenzsignal, welches die Abstandsinformation zur Füllgutoberfläche enthält und ausgewertet wird.

Mit dem variablen Leistungsregler 128 wird beispielsweise eine adaptive Leistungsregelung, abgestimmt auf die Echoverhältnisse der Füllstandmessung, durchgeführt. Diese Störungsminderungstechnik ist beispielsweise in dem europäischen Standard EN 302 729-1 V1.1.2 (2011-05) beschrieben.

Zusätzlich wird vorzugsweise während der Einschwingzeitdauer und/oder während des Einregelns der Phasenregelschleife 106 die Verstärkung des variablen Leistungsreglers 128 auf den niedrigsten Wert eingestellt. So können ungewollte Aussendungen vor Beginn der eigentlichen Frequenzrampe minimiert werden. Erst kurz vor dem Start der Frequenzrampe wird der gewünschte Verstärkungswert eingestellt und die Sendeleistung angehoben. Gesteuert wird der Leistungsregler 128 beispielsweise durch die Steuereinheit 104.

Über die Auswertung des Leistungsdetektors 134 beispielsweise durch die Steuereinheit 104, kann mit bekannter Koppeldämpfung im zweiten Koppler 130 auf die Sendeleistung geschlossen werden, die der Antenne 113 zugeführt und ausgesendet wird.

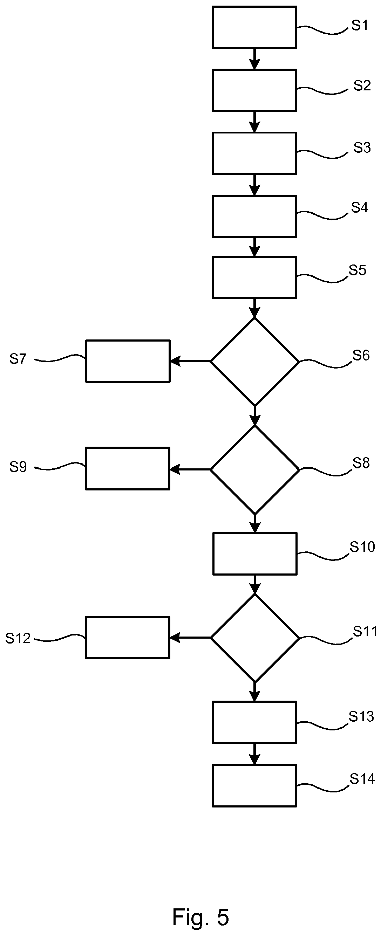

Fig. 5 zeigt schematisch ein Flussdiagramm zur Illustration von Schritten eines Verfahrens zum Betreiben eines Radarfüllstandmessgeräts 100 mit dem Hochfrequenzmodul aus Fig. 4. Fig. 5 zeigt dabei ein mögliches Ablaufdiagramm dieser Schaltungsvariante.

Die Schritte S1, S2 und S3 entsprechen den bei Figur 2 beschriebenen, so dass auf die Ausführungen unter Figur 2 verwiesen wird.

Während der Einschwingzeitdauer, d.h. während des Einregelns des Frequenzsynthesizers 102 und/oder des Oszillators 110, wird die Energieversorgung der aktiven Komponenten des Hochfrequenzmoduls 112 in einem weiteren Schritt S4 durch entsprechendes Betätigen des Energieversorgungsmoduls 114 angeschaltet. Zusätzlich wird der Leistungsregler 128 auf seinen niedrigsten Verstärkungswert eingestellt. So wird sichergestellt, dass ungewollte Aussendungen minimiert werden. Es folgt wiederum das Abwarten einer zuvor festgelegten Wartezeitdauer in einem Schritt S5. Diese Wartezeitdauer sollte so festgelegt sein, dass die Frequenz des Oszillatorsignals am Ende der Wartezeitdauer den Sollwert erreicht hat, so dass der Oszillator 110 auf seiner Startfrequenz steht, und sich das Hochfrequenzmodul 112 nach dem Anschalten der Versorgungsspannung und/oder Energieversorgung durch Betätigen des Energieversorgungsmoduls 114 im eingeschwungenen Zustand befindet.

In einem Schritt S6 wird zunächst durch die Steuereinheit 104 abgefragt, ob die in dem Kontrollmodul 120 ermittelten Strom- und Spannungswerte des Hochfrequenzmoduls 112 in den festgelegten Grenzen liegen. Ist dies nicht der Fall, so kann die Messroutine in S7 abgebrochen werden. Alternativ kann auch eine zusätzliche Wartezeitdauer eingefügt werden und beispielsweise bei Schritt S5 wieder in die Messroutine eingestiegen werden, d.h. Schritt S5 kann erneut durchgeführt werden.

In einem weiteren Schritt S8 wird das Kontrollsignal des Phasenregelelements 108 durch die Steuereinheit 104 abgefragt. Ist das Kontrollsignal nicht vorhanden, kann in Schritt S9 die Messroutine abgebrochen oder alternativ in Schritt S5 wieder gestartet werden.

Ist das Kontrollsignal vorhanden, wird die Verstärkung des variablen Leistungsreglers 128 in Schritt S10 auf den gewünschten Wert eingestellt, so dass ausreichend Sendeleistung für eine Füllstandmessung zur Verfügung steht. Die momentane Sendeleistung bzw. Leistung des Sendesignals wird im Leistungsdetektor 134 ermittelt und in Schritt S 11 durch die Steuereinheit 104 abgefragt und/oder ermittelt. Ist die Sendeleistung außerhalb des spezifizierten Bereiches, wird die Messroutine in Schritt S12 abgebrochen oder alternativ in Schritt S5 erneut gestartet. Befindet sich die Sendeleistung in dem zuvor festgelegten Bereich, so wird dagegen in Schritt S13 die Frequenzrampe durchfahren. Wurde die Frequenzrampe des SFCW- oder FMCW- Sendesignals durchfahren, werden im Schritt S14 die Energie- bzw. Spannungsversorgungen des Frequenzsynthesizers 102 und des Hochfrequenzmoduls 112 durch Betätigen des Energieversorgungsmoduls 114 wieder abgeschaltet. Vorzugsweise werden die Strom- und Spannungswerte an dem Hochfrequenzmodul 112, das Kontrollsignal und/oder die Leistung des Sendesignals während des Durchfahrens der Frequenzrampe kontinuierlich überwacht, so dass bei einer Fehlfunktion unmittelbar eingegriffen werden kann oder gegebenenfalls die Messung verworfen werden kann.

Zusammenfassend kann mit dem erfindungsgemäßen Radarfüllstandmessgerät 100 eine Funktionskontrolle von Teilschaltungen, insbesondere des Frequenzsynthesizers 102, des Hochfrequenzmoduls 112 und/oder der Leistung des Sendesignals vor und/oder während des Aussendens des modulierten Messsignals zur Füllstandmessung in einem getakteten Betrieb des Radarfüllstandmessgeräts 100 überprüft und/oder kontrolliert werden. Insbesondere kann der Frequenzsynthesizer 102 mit dem Kontrollsignal überwacht werden als Bedingung für das nachfolgende Aussenden des Messsignals. Ferner kann eine unerwünschte Aussendung von Messsignalen im getakteten Messbetrieb durch das Umschalten des variablen Leistungsreglers 128 von einer niedrigen Verstärkung zu der gewünschten, höheren Verstärkung unmittelbar vor Beginn der Frequenzrampe, d.h. auch während der Einschwingzeitdauer des Frequenzsynthesizers 112, vermieden werden.

Ergänzend sei daraufhingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Radarfüllstandmessgerät (100) zum Ermitteln eines Füllstandes eines Füllguts, wobei das Radarfüllstandmessgerät für einen getakteten Betrieb eingerichtet ist, das Radarfüllstandmessgerät (100) aufweisend:
einen Frequenzsynthesizer (102) zum Erzeugen eines Oszillatorsignals;
ein Hochfrequenzmodul (112) zum Erzeugen eines Sendesignals basierend auf dem Oszillatorsignal; und
ein Energieversorgungsmodul (114) zur Versorgung des Frequenzsynthesizers (102) und des Hochfrequenzmoduls (112) mit elektrischer Energie;
wobei der Frequenzsynthesizer (102) eine Steuereinheit (104) und eine Phasenregelschleife (106) mit einem Phasenregelelement (108) und einem Oszillator (110) aufweist;
wobei die Phasenregelschleife (106) dazu eingerichtet ist, eine Frequenz des Oszillatorsignals auf einen Sollwert zu regeln;
wobei das Phasenregelelement (108) dazu eingerichtet ist, ein Kontrollsignal für die Steuereinheit (104) bereitzustellen, wenn die Frequenz des Oszillatorsignals den Sollwert erreicht hat; und
**dadurch gekennzeichnet, dass** die Steuereinheit (104) dazu eingerichtet ist, während einer Einschwingzeitdauer, in welcher die Frequenz des Oszillatorsignals auf den Sollwert geregelt wird, das Energieversorgungsmodul (114) zur Versorgung des Hochfrequenzmoduls (112) mit elektrischer Energie zu betätigen, bevor das Kontrollsignal durch das Phasenregelelement (108) bereitgestellt ist.

2. Radarfüllstandmessgerät (100) nach Anspruch 1,
wobei die Steuereinheit (104) dazu eingerichtet ist, als Antwort auf das Kontrollsignal eine Füllstandmessung durchzuführen.

3. Radarfüllstandmessgerät (100) nach einem der Ansprüche 1 oder 2,
wobei die Steuereinheit (104) dazu eingerichtet ist, während eines Durchfahrens einer Frequenzrampe durch den Frequenzsynthesizer (102) das Kontrollsignal kontinuierlich zu überwachen.

4. Radarfüllstandmessgerät (100) nach einem der voranstehenden Ansprüche,
wobei die Steuereinheit (104) dazu eingerichtet ist, eine nach Ablauf einer definierbaren, programmierbaren und/oder dynamisch anpassbaren Wartezeitdauer eine Füllstandmessung durchzuführen.

5. Radarfüllstandmessgerät (10) nach einem der voranstehenden Ansprüche,
wobei das Energieversorgungsmodul (114) einen ersten Ausgang (115) zur Versorgung des Frequenzsynthesizers (102) und einen zweiten Ausgang (117) zur Versorgung des Hochfrequenzmoduls (112) aufweist;
wobei der erste Ausgang (115) und der zweite Ausgang (117) unabhängig voneinander durch die Steuereinheit (104) betätigbar sind.

6. Radarfüllstandmessgerät (100) nach einem der voranstehenden Ansprüche,
wobei das Energieversorgungsmodul (114) eine erste Energieversorgungseinheit (115) zur Versorgung des Frequenzsynthesizers (102) mit elektrischer Energie und eine zweite Energieversorgungseinheit (117) zur Versorgung des Hochfrequenzmoduls (112) mit elektrischer Energie aufweist; und
die erste Energieversorgungseinheit (115) und die zweite Energieversorgungseinheit (117) unabhängig voneinander durch die Steuereinheit (104) betätigbar sind.

7. Radarfüllstandmessgerät (100) nach einem der voranstehenden Ansprüche,
wobei der Frequenzsynthesizer (102) ferner einen Referenzoszillator (103) zur Ausgabe eines Referenzsignals an die Phasenregelschleife (106) aufweist; und/oder
wobei die Phasenregelschleife (106) ferner ein Schleifenfilter (105) zur Filterung eines von dem Phasenregelelement (108) an den Oszillator (110) übergebenen Signals aufweist.

8. Radarfüllstandmessgerät (100) nach einem der voranstehenden Ansprüche, weiter aufweisend:
ein Kontrollmodul (120) zur Überwachung einer dem Hochfrequenzmodul (112) durch das Energieversorgungsmodul (114) zugeführten elektrischen Energie;
wobei das Kontrollmodul (120) dazu eingerichtet ist, bei Überschreiten oder Unterschreiten vorgegebener Werte für die Energieversorgung des Hochfrequenzmoduls (112) ein Steuersignal an die Steuereinheit (104) auszugeben.

9. Radarfüllstandmessgerät (100) nach einem der voranstehenden Ansprüche,
wobei das Hochfrequenzmodul (112) einen ersten Koppler (122), einen zweiten Koppler (130), einen Leistungsregler (128) zur Regelung einer Leistung des Sendesignals und einen Leistungsdetektor (134) zur Überprüfung der Leistung des Sendesignals aufweist;
wobei ein Eingang (123) des ersten Kopplers (122) mit einem Ausgang des Frequenzsynthesizers (102) verbunden ist;
wobei ein Ausgang (125) des ersten Kopplers (122) mit einem Eingang (127) des Leistungsreglers (128) verbunden ist;
wobei ein Ausgang (129) des Leistungsreglers (128) mit einem Eingang (131) des zweiten Kopplers (130) verbunden ist; und
wobei der zweite Koppler (130) dazu eingerichtet ist, dem Leistungsdetektor (134) einen Teil der Leistung des Sendesignals zuzuführen.

10. Radarfüllstandmessgerät (100) nach Anspruch 9,
wobei der Leistungsdetektor (134) mit der Steuereinheit (104) verbunden ist; und
wobei die Steuereinheit (104) dazu eingerichtet ist, basierend auf einem von dem Leistungsdetektor (134) bereitgestellten und mit der Leistung des Sendesignals korrelierenden Signals die Leistung des Sendesignals zu ermitteln; und
wobei die Steuereinheit (104) ferner mit dem Leistungsregler (128) gekoppelt ist und zur Regelung des Leistungsreglers (128) eingerichtet ist.

11. Radarfüllstandmessgerät (100) nach Anspruch 10,
wobei die Steuereinheit (104) dazu eingerichtet ist, während einer Einschwingzeitdauer durch Regelung des Leistungsreglers (128) die Leistung des Sendesignals zu minimieren; und/oder
wobei die Steuereinheit (104) dazu eingerichtet ist, unmittelbar vor Durchführung einer Füllstandmessung die Leistung des Sendesignals auf einen Leistungssollwert zu erhöhen.

12. Radarfüllstandmessgerät (100) nach einem der Ansprüche 9 bis 11,
wobei der Leistungsregler (128) ein variabler Verstärker oder ein variables Dämpfungsglied ist.

13. Verfahren zum Betreiben eines Radarfüllstandmessgeräts (100) nach einem der voranstehenden Ansprüche,
das Verfahren aufweisend die Schritte:
Betätigen des Energieversorgungsmoduls (114) zur Versorgung des Frequenzsynthesizers (102) mit elektrischer Energie;
Regeln, mit einer Phasenregelschleife (106) des Frequenzsynthesizers (102), einer Frequenz des Oszillatorsignals auf einen vorgegebenen Sollwert;
Bereitstellen, durch ein Phasenregelelement (108) der Phasenregelschleife (106), eines Kontrollsignals, wenn die Frequenz des Oszillatorsignals mit dem Sollwert übereinstimmt; und
Betätigen, während einer Einschwingzeitdauer, in welcher die Frequenz des Oszillatorsignals auf den Sollwert geregelt wird, des Energieversorgungsmoduls (114) zur Versorgung des Hochfrequenzmoduls (112) mit elektrischer Energie bevor das Kontrollsignal bereitgestellt ist.

14. Programmelement, das, wenn es auf einer Steuereinheit (104) eines Radarfüllstandmessgeräts (100) ausgeführt wird, das Radarfüllstandmessgerät (100) anleitet, die Schritte des Verfahrens nach Anspruch 13 auszuführen.

15. Computerlesbares Medium, auf dem ein Programmelement gespeichert, das, wenn es auf einer Steuereinheit (104) eines Radarfüllstandmessgeräts (100) ausgeführt wird, das Radarfüllstandmessgerät (100) anleitet, die Schritte des Verfahrens nach Anspruch 13 auszuführen.

## Claims

1. A radar fill level measuring device (100) for emitting a fill level of a fill product, wherein the radar fill level measuring device is configured for clocked operation, the radar fill level measuring device (100) comprising:
a frequency synthesizer (102) configured to generate an oscillator signal;
a high frequency module (112) configured to generate a transmission signal based on the oscillator signal; and
an energy supply module (114) configured to supply electrical energy to the frequency synthesizer (102) and the high frequency module (112);
wherein the frequency synthesizer (102) comprises a controller (104), a phase-locked loop (106) with a phase regulator element (108) and an oscillator (110); and
wherein the phase-locked loop (106) is configured to adjust a frequency of the oscillator signal to a target value;
wherein the phase regulator element (108) is configured to provide a control signal for the controller (104), when the frequency of the oscillator signal has reached the target value;
**characterized in that**
the controller (104) is configured to actuate, during a settling time, in which the frequency of the oscillator signal is adjusted to the target value, the energy supply module to supply the high-frequency module (112) with electrical energy before the control signal is provided by the phase regulator element (108).

2. The radar fill level measuring device (100) of claim 1,
wherein the controller (104) is configured to determine the fill level in response to the control signal.

3. The radar fill level measuring device (100) of claim 1 or 2,
wherein the controller (104) is configured to continuously monitor the control signal while a frequency sweep is performed by the frequency synthesizer (102).

4. The radar fill level measuring device (100) according to one of the preceding claims,
wherein the controller (104) is configured to determine the fill level after a definable, a programmable and/or a dynamically adaptable waiting time is over.

5. The radar fill level measuring device (100) according to one of the preceding claims,
wherein the energy supply module (114) comprises a first output (115) for supplying the frequency synthesizer (102) and a second output (117) for supplying the high frequency module (112);
wherein the first output (115) and the second output (117) are actuatable independently from each other by the controller.

6. A radar fill level measuring device (100) according to one of the preceding claims,
wherein the energy supply module (114) comprises a first energy supply device (115) for supplying the frequency synthesizer (102) with electrical energy and a second energy supply device (117) for supplying the high frequency module (112) with electrical energy; and
the first energy supply device (115) and the second energy supply device (117) are actuatable independently from each other by the controller.

7. The radar fill level measuring device (100) according to one of the preceding claims,
wherein the frequency synthesizer (102) further comprises a reference oscillator (103) configured to output a reference signal to the phase-locked loop (106); and/or
wherein the phase-locked loop (106) further comprises a loop filter (105) for filtering a signal passed from the phase regulator element (108) to the oscillator (110).

8. The radar fill level measuring device (100) according to one of the preceding claims, further comprising:
a control module (120) configured to monitor the electrical energy supplied to the high-frequency signal module (112) by the energy-supply module (114),
wherein the control module (120) is configured to output a control signal to the controller (104) if preset values for the energy supply to the high-frequency signal module (112) are exceeded or fall below a predetermined value.

9. The radar fill level measuring device (100) according to one of the preceding claims,
wherein the high frequency module (112) comprises a first coupler (122), a second coupler (130), a power regulator (128) for regulating a power of the transmission signal and a power detector (134) for regulating the power of the transmission signal;
wherein an input (123) of the first coupler (122) is coupled with an output of the frequency synthesizer (102);
wherein an output (125) of the first coupler (122) is coupled with an input (127) of the power regulator (128);
wherein an output (129) of the power regulator (128) is coupled with an input (131) of the second coupler (130); and
wherein the second coupler (130) is configured to supply a part of the power of the transmission signal to the power detector (134).

10. The radar fill level measuring device (100) of claim 9,
wherein the power detector (134) is coupled with the controller (104); and
wherein the controller (104) is configured, based on a signal provided by the power detector (134) and correlating with the power of the transmission signal, to determine the power of the transmission signal; and
wherein the controller (104) is further coupled with the power regulator (128) and is configured to regulate the power regulator (128).

11. The radar fill level measuring device (100) of claim 10,
wherein the controller (104) is configured to minimize the power of the transmission signal during a settling time by adjusting the power regulator (128); and/or
wherein the controller (104) to increase the power of the transmission signal to a target power value immediately before a fill level measurement is carried out.

12. The radar fill level measuring device (100) according to one of claims 9 to 11,
wherein the power regulator (128) is a variable amplifier or a variable attenuator.

13. A method for operating a fill level measuring device (100) according to one of the preceding claims, the method comprising the steps of:
actuating the energy supply module (114) to provide the frequency synthesizer (102) with electrical energy;
adjusting a frequency of the oscillator signal to a preset target value using a phase-locked loop of the frequency synthesizer
providing a control signal using a phase regulator element (108) of the phase-locked loop when the frequency of the oscillator signal matches the preset target value; and
actuating, during a settling time, in which the frequency of the oscillator signal is adjusted to the target value, the energy supply module (114) to supply the high frequency module (112) with electrical energy before the control signal is provided.

14. A program element, which, when executed on a controller (104) of a radar fill level measuring device (100), instructs the radar fill level measuring device (100) to perform the steps of the method of claim 13.

15. A computer-readable medium having stored thereon a computer program element, which, when executed on a controller (104) of a radar fill level measuring device (100), instructs the radar fill level measuring device (100) to perform the steps of the method of claim 13.

## Revendications

1. Appareil de mesure de niveau de remplissage par radar (100) pour déterminer le niveau de remplissage d'un produit de remplissage, l'appareil de mesure de niveau de remplissage par radar étant configuré pour un fonctionnement cadencé, l'appareil de mesure de niveau de remplissage par radar comprenant:
un synthétiseur de fréquence (102) configuré pour générer un signal d'oscillateur;
un module à haute fréquence (112) configuré pour générer un signal de transmission basé sur le signal d'oscillateur; et
un module d'approvisionnement en énergie (114) configuré pour approvisionner en énergie électrique le synthétiseur de fréquence (102) et le module à haute fréquence (112);
dans lequel le synthétiseur de fréquence (102) comprend une unité de contrôle (104) et une boucle à phase asservie (106) avec un élément de régulateur de phase (108) et un oscillateur (110);
dans lequel la boucle à phase asservie (106) est configurée pour régler la fréquence du signal d'oscillateur sur une valeur de consigne;
dans lequel l'élément de régulateur de phase (108) est configuré pour fournir un signal de commande à l'unité de contrôle (104) lorsque la fréquence du signal d'oscillateur a atteint la valeur de consigne;
et **caractérisé en ce que**
l'unité de contrôle (104) est configurée pour actionner, durant la période de stabilisation durant laquelle la fréquence du signal d'oscillateur est ajustée sur une valeur de consigne, le module d'approvisionnement en énergie (114) pour approvisionner en énergie électrique le module à haute fréquence (112) avant que le signal de commande ne soit fourni par l'élément de régulateur de phase (108).

2. Appareil de mesure de niveau de remplissage par radar (100) selon la revendication 1,
dans lequel l'unité de contrôle (104) est configurée pour effectuer une mesure du niveau de remplissage en réponse au signal de commande.

3. Appareil de mesure de niveau de remplissage par radar (100) selon la revendication 1 ou 2,
dans lequel l'unité de contrôle (104) est configurée pour continuellement surveiller durant un balayage de fréquence le signal de commande avec le synthétiseur de fréquence (102).

4. Appareil de mesure de niveau de remplissage par radar (100) selon l'une quelconque des revendications précédentes,
dans lequel l'unité de contrôle (104) est configurée pour procéder à une mesure du niveau de remplissage après qu'un temps d'attente définissable, programmable et/ou dynamiquement adaptable se soit écoulé.

5. Appareil de mesure de niveau de remplissage par radar (100) selon l'une quelconque des revendications précédentes,
dans lequel le module d'approvisionnement en énergie (114) comprend une première sortie (115) pour l'approvisionnement du synthétiseur de fréquence (102) et une deuxième sortie (117) pour l'approvisionnement du module à haute fréquence (112);
dans lequel la première sortie (115) et la deuxième sortie (117) sont actionnables indépendamment l'une de l'autre par l'unité de contrôle (104).

6. Appareil de mesure de niveau de remplissage par radar (100) selon l'une quelconque des revendications précédentes,
dans lequel le module d'approvisionnement en énergie (114) comprend une première unité d'approvisionnement en énergie (115) pour l'approvisionnement du synthétiseur de fréquence (102) en énergie électrique et une deuxième unité d'approvisionnement en énergie (117) pour l'approvisionnement du module à haute fréquence (112) en énergie électrique; et
la première unité d'approvisionnement en énergie (115) et la deuxième unité d'approvisionnement en énergie (117) sont actionnables indépendamment l'une de l'autre par l'unité de contrôle (104).

7. Appareil de mesure de niveau de remplissage par radar (100) selon l'une quelconque des revendications précédentes,
dans lequel le synthétiseur de fréquence (102) comprend en outre un oscillateur de référence (103) configuré pour fournir un signal de référence à la boucle à phase asservie (106); et/ou
dans lequel la boucle à phase asservie (106) comprend en outre un filtre de boucle (105) pour filtrer un signal fournit de l'élément de régulateur de phase (108) à l'oscillateur (110).

8. Appareil de mesure de niveau de remplissage par radar (100) selon l'une quelconque des revendications précédentes, comprenant en outre:
un module de commande (120) configuré pour réguler une énergie électrique approvisionnée au module à haute fréquence (112) par le module d'approvisionnement en énergie (114);
dans lequel le module de commande est configuré pour fournir un signal de commande à l'unité de contrôle si les valeurs préétablies pour l'approvisionnement en énergie du module à haute fréquence dépasse ou est inférieur à la valeur prédéterminée.

9. Appareil de mesure de niveau de remplissage par radar (100) selon l'une quelconque des revendications précédentes,
dans lequel le module à haute fréquence (112) comprend un premier coupleur (122), un deuxième coupleur (130), un régulateur de puissance (128) pour réguler une puissance du signal de transmission et un détecteur de puissance (134) pour vérifier la puissance du signal de transmission;
dans lequel une entrée (123) du premier coupleur (122) est reliée à une sortie du synthétiseur de fréquence (102);
dans lequel une sortie (125) du premier coupleur (122) est reliée à une entrée (127) du régulateur de puissance (128);
dans lequel une sortie (129) du régulateur de puissance (128) est reliée à une entrée (131) du deuxième coupleur (130); et
dans lequel le deuxième coupleur (130) est configuré pour fournir une partie de la puissance du signal de transmission au détecteur de puissance (134).

10. Appareil de mesure de niveau de remplissage par radar (100) selon la revendication 9,
dans lequel le détecteur de puissance (134) est relié à l'unité de contrôle (104); et
dans lequel l'unité de contrôle (104) est configurée pour déterminer la puissance du signal de transmission, basé sur un signal fournit par le détecteur de puissance (134) et en corrélation avec la puissance du signal de transmission; et
dans lequel l'unité de contrôle (104) est en outre reliée au régulateur de puissance (128) et est configurée pour réguler le régulateur de puissance (128).

11. Appareil de mesure de niveau de remplissage par radar (100) selon la revendication 10,
dans lequel l'unité de contrôle (104) est configurée pour minimiser la puissance du signal de transmission durant la période de stabilisation en ajustant le régulateur de puissance (128); et/ou
dans lequel l'unité de contrôle (104) est configurée pour augmenter la puissance du signal de transmission à une valeur de puissance de consigne immédiatement avant qu'une mesure du niveau de remplissage ne soit exécutée.

12. Appareil de mesure de niveau de remplissage par radar (100) selon l'une quelconque des revendications 9 à 11,
dans lequel le régulateur de puissance (128) est un amplificateur variable ou un atténuateur variable.

13. Méthode pour le fonctionnement d'un appareil de mesure de niveau de remplissage par radar (100) selon l'une quelconque des revendications précédentes,
méthode comprenant les étapes consistant à:
actionner le module d'approvisionnement en énergie (114) pour approvisionner en énergie électrique le synthétiseur de fréquence (102);
ajuster une fréquence du signal d'oscillateur sur une valeur de consigne préétablie utilisant une boucle à phase asservie (106) du synthétiseur de fréquence (102);
fournir, un signal de commande utilisant un élément régulateur de phase (108) de la boucle à phase asservie (106), lorsque que la fréquence du signal d'oscillateur coïncide avec la valeur de consigne préétablie; et
actionner, durant la période de stabilisation, durant laquelle la fréquence du signal d'oscillateur est ajustée sur la valeur de consigne, le module d'approvisionnement en énergie (114) pour approvisionner le module à haute fréquence (112) en énergie électrique avant que le signal de commande ne soit fourni.

14. Élément de programme qui, lorsque qu'il est exécuté sur une unité de contrôle (104) d'un appareil de mesure de niveau de remplissage par radar (100), instruit l'appareil de mesure de niveau de remplissage par radar (100) à exécuter les étapes de la méthode selon la revendication 13.

15. Support lisible par ordinateur sur lequel est enregistré un élément de programme, qui, lorsqu'il est exécuté sur une unité de contrôle (104) d'un appareil de mesure de niveau de remplissage par radar (100), instruit l'appareil de mesure de niveau de remplissage par radar (100) à exécuter les étapes selon la revendication 13.
